# EUROPEAN PATENT APPLICATION

(11) **EP 4 851 900 A1**
(43) Date of publication of application: **09.12.2026**
(21) Application number: 25181403.4
(22) Date of filing: 06.06.2025
(51) Int. Cl.: G06Q 20/10, G06Q 20/22, G06Q 20/32, G06Q 20/36, G06Q 20/38

(54) **SECURE ELEMENT**

(71) Applicant: Giesecke+Devrient advance52 GmbH, 81677 München (DE)
(72) Inventor: Bohn, Markus, 81677 München (DE); Martini, Ullrich, 81677 München (DE)
(74) Representative: Giesecke+Devrient IP

(57) **Abstract**

The present invention relates to a secure element (1), comprising:
a wallet application (10) of a payment transaction system,
the wallet application (10) comprising static wallet data (11,12,13) and variable wallet data (14,15),
wherein the static wallet data (11,12,13) include a unique wallet identifier (11) identifying the wallet application (10) of the secure element (1) in the payment transaction system,
wherein the variable wallet data (14,15) change in transactions (T1,T2) of the payment transaction system.

After a first transaction (T1) has been performed with the wallet application (10) of the secure element (1), the secure element (1) is configured for transferring the wallet application (10) to a target secure element (2) for performing further transactions with the transferred wallet application (10) in the target secure element (2). The secure element (1) is configured to encrypt at least a part of the static wallet data (11,12,13) and/or the variable wallet data (14,15) for a decryption in the target secure element (2).

## Description

The invention relates to a secure element comprising a wallet application of a payment transaction system.

Secure elements typically are separate hardware secure elements, like smart cards or RFID tokens, or secure elements of a device, like a SIM card or an embedded UICC or a NFC unit of the device. The device could be an IoT device or a user device.

In the field of digital money systems, including digital currency systems, account-based systems and token-based systems form well known different approaches. Many of the recent account-based systems use blockchains, wherein ownership of the digital money is transferred within the blockchain, e.g. by changing the assignment from one account to another account. However, these systems typically do not support offline transactions. Isolated existing proposals significantly increase the storage requirements for the transaction unit. In token-based digital money systems typically a monetary value token is transferred between secure transaction units. For example EP 3 671 514 B1, WO 2020/212331 A1, WO 2021/170646 A1, WO 2023/011758 A1 and WO 2023/011761 A1 disclose different aspects of such systems. Monetary value tokens may be used in transactions offline and online. However, particularly for offline transactions the wallet application storing and exchanging the monetary value tokens should preferably be situated in a secure element.

Monetary value tokens can be loaded to a wallet application in the secure element for being available in transactions. If required, the monetary value tokens could also be unloaded from the secure element in a transaction with an online wallet of the bank of the secure element owner/user. A wallet application can be remotely added to or deleted from a secure element. Secure element management units which are capable to remotely add or delete wallet applications in secure elements are known in the field.

According to an object of the invention a secure element shall be provided which improves the application management, preferably with remaining or increased security and/or with remaining or decreased management effort, particularly for embedded secure elements of devices.

The above-identified objectives are solved with the features of the independent claims. Further advantageous embodiments are described in the dependent claims.

According to an aspect of the present invention, there is provided a secure element, comprising a wallet application of a payment transaction system,
the wallet application comprising static wallet data and variable wallet data,
wherein the static wallet data include a unique wallet identifier identifying the wallet application of the secure element in the payment transaction system, and
wherein the variable wallet data change in transactions of the payment transaction system.

After at least one (or more) transaction has been performed with the wallet application of the secure element, the secure element is configured for transferring the wallet application to a target secure element for performing further transactions with the transferred wallet application in the target secure element. The secure element is configured to encrypt wallet data, at least a part of the static wallet data and/or the variable wallet data, for a decryption in the target secure element.

Hence, in the present approach the used wallet application is transferred. Compared to the known approach of deleting the used wallet application on the secure element and adding a new wallet application on the target secure element, some steps can be avoided, e.g. including certificate generation and/or token funding. A theoretically possible simple approach for a transfer could be unloading the wallet application to a secure element management unit and subsequently loading the wallet application to the target secure element. This approach would be in line with existing secure element management schemes, like GlobalPlatform specifications. In the present approach however, the secure element additionally encrypts wallet data, the part of the static wallet data and/or the variable wallet data, and provides the encrypted wallet data for the target secure element.

The secure element may also be referred to as the source secure element, although it will be referred to as the secure element in the following only. The wallet application of the secure element may also be referred to as the used wallet application, since at least one transaction was performed. The wallet application of the target secure element may also be referred to as the transferred wallet application.

In particularly advantageous variants a first part of the wallet application of the secure element is provided by the secure element for the target secure element, the first part including the encrypted wallet data. A second part of the wallet application of the secure element is provided for the target element by a secure element management unit.

The selective provisioning of parts of the wallet application creates further management capabilities and management options as it will become apparent in the following. In addition, the amount of data to be sent from the (source) secure element can be reduced.

The wallet application preferably also comprises a wallet code executable in the secure element(s). Thus, for example, the wallet code can be provided by the secure element management unit such that the secure element would not have to send it (to the target secure element, neither directly nor indirectly via an intermediary device or the secure element management unit).

For the second part of the wallet application the secure element management unit may perform a selection for the target secure element. Based on a property of the target secure element (and/or its device), e.g. a type of the target secure element ("embedded", "removable" or "device independent") or a security level of the target secure element or a device information, the second part of the wallet application may be selected. The static wallet data and/or the wallet code may be selected based on a property of the target secure element (and/or its device). For example only, depending on the secure element type or the security level, different certificates can be provided or depending on the device information (or a combination of device information and a target secure element property), different versions of the wallet code or different wallet configuration data (static wallet data) can be provided.

The encrypted wallet data are transferred from the secure element to the target secure element. Preferably the encrypted wallet data are locally transferred from the secure element to the target secure element, optionally via a device of the secure element and/ or a device of the target secure element and/or a local intermediary device.

The (source and/or the target) secure element can be a separate hardware secure element, like smart card, RFID token, secure USB token or secure SD card, a removable secure element of a device, like a SIM card, UICC or a secure SD card, or an embedded secure element of a device, such as a embedded SIM card or eUICC or NFC unit or TPM unit. The device may for example be a user device, like smart phone, computer or wearable, or may be an IoT device. The secure element management unit is arranged for remotely managing secure elements. It thus can also be referred to as a remote secure element management unit.

For the decryption of the encrypted wallet data, the target security element requires a decryption (enabling) key. The decryption (enabling) key may be a symmetric key or an asymmetric key. It can be used to decrypt the encrypted data or at least used to generate a key used in the decryption.

Preferably, the secure element is configured to exchange (send or receive) the decryption (enabling) key for the decryption of the encrypted wallet data with a secure element management unit, wherein the secure element management unit provides the decryption key to the target secure element. Hence, the decryption (enabling) key may be generated in the secure element and sent to the secure element management unit or generated in the secure element management unit and received in the secure element. Alternatively, the secure element is configured to exchange or generate the decryption (enabling) key with the target secure element, preferably based on a generation key provided to the target secure element by the secure element management unit.

The static wallet data may further comprise a wallet secret key and/or a wallet certificate and/or wallet configuration data (e.g. a limit of the wallet application or a mode for the wallet application). The wallet certificate preferably certifies a wallet public key of the key pair including the wallet secret key and the wallet public key and/or the wallet identifier.

For the decryption in the target secure element it may be noted that the decrypted data will be also checked before being stored in the unused wallet application. For example, the formatting and/or one or more checksum(s) of the decrypted data may be checked.

In the preferred variants the variable wallet data comprise one or more monetary value tokens of the payment transaction system.

A monetary value token typically comprises one or more of the following data elements: a value data element, a token individual secret, preferably a secret key of a key pair, a token reference, preferably derived from the token secret and/or a public key of a (the) key pair, and possibly a token issuer information. Exchanging a monetary value token in an (online or offline) transaction constitutes a payment transaction (since the exchange transfers the monetary value of the monetary value token).

The payment transaction system preferably comprises one or more token issuers and/or a token (reference) register and/or a transaction history register. A token reference register includes token references (but not the tokens). For example WO 2021/170646 A1, WO 2023/011758 A1, WO 2023/011761 A1 and WO 2024/027869 A1 show details of possible monetary value tokens and/or registers.

In transactions new tokens can be created based on stored tokens, split a token, merge tokens or switch tokens. Hence, in addition or alternatively to (normal) transaction history data, e.g. including sender, recipient and value of a transaction, token generation history data are generated in transactions. These token generation history data are typically send to a token (reference) register and thus are referred to as token registration data.

In addition or alternatively the variable wallet data may comprise history data for performed transactions, particularly token registration data and/or transaction registration data. Token registration data are generated in a transaction, if a new token is created in the transaction based on an existing token. Transaction registration data include transaction details, particularly including at least the monetary value of the transaction and/or the transaction participants (secure elements).

The encrypted wallet data transferred to the target secure element may comprise:
- the unique wallet identifier and/or the wallet secret key and/or the wallet certificate and/or wallet configuration data; and/or
- the one or more monetary value tokens and/or the history data.

In the most preferred variants, the monetary value tokens are included in the encrypted wallet data. Preferably, the wallet identifier and/or the wallet secret key and/or the monetary value tokens are transferred in the encrypted wallet data. The wallet certificate however may be not included in the encrypted wallet data, but in preferred variants a new wallet certificate is issued. The history data may (also) not be included in the encrypted wallet data, preferably the history data are sent to a (token (reference) or transaction) register of the payment transaction system prior or during the transfer of the wallet application.

Although the encrypted wallet data are preferably transferred locally, they may also be transferred via the secure element management unit (from the secure element to the remote secure element management unit and from the remote secure element management unit to the target secure element).

Optionally, the wallet application comprises a wallet status. Known possible status values for the wallet status would "active" or "inactive". Wallet applications having an active wallet status may perform transactions and wallet applications having an inactive wallet status may not perform transactions. A new status in the present context could be "in transfer", preferably "transferring" (for the source secure element). The wallet status of the secure element may be irreversibly changed from an active state to a state (inactive or transferring) in which no transactions are allowed before or when the wallet data are encrypted for the target secure element. In embodiments a similar effect may be achieved when the wallet certificate and/or the wallet secret key is deleted from the secure element (e.g. before, during or after the encryption).

In the present process preferably exclusively either the wallet status of the used wallet application in the secure element or in the target secure element represents an active status in which transactions are possible. Only one of both secure elements will be active at a time. In particular, the wallet status of the secure element may represent an inactive status in which no transactions are possible, at least after the encrypted data are generated and/or transferred. One or both wallet status of the secure element may represent a transfer status in which no transactions are possible, in particular before the encrypted data are generated and/or transferred.

In variants at least the target secure element and optionally both secure elements comprises a verifiable security level indicator. The security level indicator indicates one out of multiple security levels which secure elements may have. The security level indicator can be verified by a (the source) secure element or by the secure element management unit in a step of checking that the security level of the secure element is high enough for the wallet application. The security level indicator may preferably be a certificate issued by a third party or a security level key associated and/or certified for the corresponding security level of the multiple security levels of security elements.

A device comprising a, preferably embedded, secure element according to one of the preceding aspects can be provided. The device preferably includes a wallet user interface application and/or a secure element management device application.

A system provided in accordance with the present approach will comprise the secure element as described above and optionally being an embedded secure element of a device, and the target secure element, preferably being an embedded secure element of another device and only optionally of the same device.

The system may further comprise one or more multiple secure element management units and multiple further secure elements including a wallet application.

The system may also further comprise a token (reference) register and/or a token issuer unit. A token reference register has already been described above and is known from the documents mentioned for monetary value token systems. Basically, the valid tokens of the transaction system are registered in the token register. Tokens can be registered by sending registration replacement requests, which are history data created and/or received in transactions. The monetary value tokens of the system are preferably initially issued/minted by a token issuer unit, e.g. CBDC tokens issued by a central bank.

In the following, the invention or further embodiments and advantages of the invention are explained in more detail based on drawings, wherein the drawings describe only some of the possible embodiments of the invention. Elements drawn with dashed lines are considered as optional elements.

The drawings are not to be regarded as true to scale, and individual elements of the drawings may be shown in exaggeratedly large or exaggeratedly simplified form.

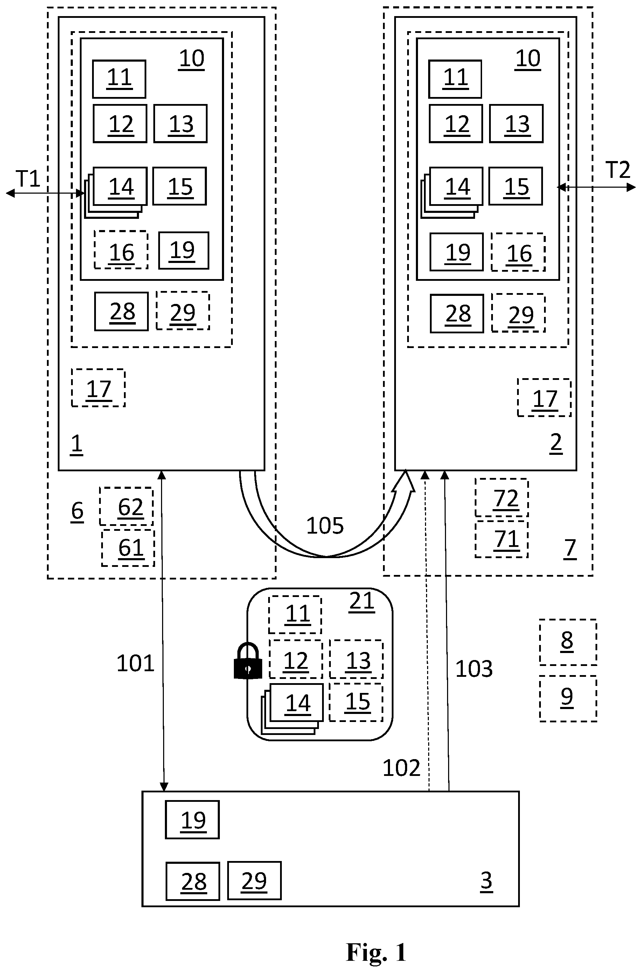

Fig. 1 shows a secure element including a wallet application and configured for the transfer of the wallet application to a target secure element.

The secure element 1 illustrated in Fig. 1 includes a wallet application 10 of a payment transaction system. A target secure element 2 initially does not include a wallet application. The wallet application 10 of the secure element 1 is transferred to the target secure element 2.

The wallet application 10 of the secure element 1 comprises wallet data 11-15 , in particular static wallet data 11-13 and variable wallet data 14, 15. The variable wallet data 14, 15 change in transactions T1 of the secure element 1.

The static wallet 11-13 data at least comprise the unique wallet identifier 11 of the wallet application 10, which identifies the wallet application 10 of the secure element 1 in the payment transaction system.

After one or more transactions T1 the wallet application 10 of the source secure element 1 is transferred to target secure element 2 for further transactions T2 performed with the transferred wallet application 10 in the target secure element 2.

The secure element 1 encrypts wallet data 11-15, at least a part of the static wallet data 11,12,13 and/or the variable wallet data 14,15, for a decryption of the encrypted wallet data 21 in the target secure element 2.

The encrypted wallet data 21 are preferably locally transferred 105 from the secure element 1 to the target secure element 2. For example, an intermediary terminal (not shown) may be used for the transfer. In the preferred embodiment the secure element 1 is an (embedded) secure element of a device 6 and/or the target secure element 2 is an (embedded) secure element of a device 7. For the local transfer of the encrypted wallet data 21 one or both devices 6, 7 may be used.

Further static wallet data shown in Fig. 1 are the wallet key 12, typically a secret wallet key of a wallet key pair, and a wallet certificate 13. The wallet key is used in transactions for an authentication of the wallet application and/or for the generation of a transaction session key. The wallet certificate 13 is issued by a third party, preferably for the wallet public key of wallet key pair and/or for the wallet identifier 11.

The variable wallet data 14, 15 change in transactions T1, T2. Monetary value tokens 14 of the used wallet application 10 of the secure element 1 are variable data included in the encrypted wallet data 21 in Fig. 1. A monetary value token 14 may be send or received in a transaction T1,T2. Furthermore, new monetary value tokens 14 may be generated based on existing monetary value tokens 14 (split/merge/switch). The variable wallet data may comprise history data 15.

For the new monetary value tokens 14, token generation history data 15 may exist, but preferably are not included in the encrypted wallet data 21.

In the payment transaction system, token generation history data 15 have to be sent to a token register 9 of the system. The token register 9 preferably is a token reference register only storing the token references of the valid tokens. A token issuer unit 8 may create/delete additional tokens in the system. Secure elements or other participants of the payment transaction system may only be allowed to replace registration of one ore more registered tokens by registration of one or more new tokens. The token generation history data 15 typically comprise one or more token registration replacement requests. Another form of history data 15 would be transaction history data 15. The transaction history data 15 indicating e.g. the participants of the transaction and the exchanged value would be send to a transaction register (not shown).

The wallet application 10 includes wallet code 19 executed in the secure element 1. The wallet code 19 is preferably not included in the encrypted wallet data 21.

Fig. 1 further illustrates a secure element management unit 3, wherein the system may comprise one or more secure element management units 3. Secure elements or their devices can be assigned to a secure element management unit 3.

The secure element management unit 3 (stores and) preferably provides the wallet code 19 of the wallet application 10 for the target secure element 2. Optionally it also provides wallet transfer code 29 for the target secure element. The code enabling the newly added function of the wallet application transfer may thus be either separate from the wallet code 19 in wallet transfer code 29 or a part of the wallet code 19. In a target preparation step 102 the wallet code 19, the wallet transfer code 29 or further preparation instruction, e.g. including establishment of a separate storage area (cf. dashed lines around elements 11-19 and 28,29) for the wallet application, may be send to the target secure element 2.

In the process illustrated in Fig. 1 the secure element 1 and the secure element management unit 3 exchange 101 a decryption (enabling) key 28, which is send 103 from the secure element management unit 3 to the target secure element 2. The secure element management unit 3 and/or the secure element 1 may generate the decryption (enabling) key 28 (and accordingly send or receive it in the exchange 101).

For the example shown in Fig. 1 a symmetric key 28 is assumed. The same key 28 would be used for the encryption in the secure element 1 and later for the decryption in the target secure element. When using an asymmetric key/ a key pair for the encryption, the keys would be a public key of a key pair used for encryption and the secret key of the key pair for decryption. Since moreover hybrid encryption schemes or key agreement schemes could be used, the term decryption enabling key 28 may be more suitable for the key exchanged 101 and send 103 for enabling decryption, possibly by a derived or generated key.

In alternative variants the encrypted wallet data 21 are transferred (not locally but) via the remote secure element management unit 3.

The wallet application may include a wallet state 16. Usually the wallet state 16 would indicate either active or inactive state of the wallet application, wherein transactions T1, T2 would be allowed or not respectively.

For the present approach the wallet state 16 of both secure elements is controlled such that exclusively either the (source) secure element 1 or the target secure element may perform transactions T1, T2.

Also for the present approach, an additional state indicating the ongoing transfer (like "transferring - not usable") is introduced. In the transferring state also no transactions would be possible.

In a preferred variant the wallet state 16 is irreversibly changed in the (source) secure element 1 from an active state of the wallet application to an inactive or transferring state, preferably (immediately before or) when encrypting the wallet data 11-15 (or immediately thereafter).

Both secure elements 1,2 may include a verifiable security level indicator (certificate) 17. Secure elements may have one out of multiple pre-defined security levels. The verifiable security level indicator is preferably issued by a third party (security evaluator) and indicates the security level of the secure element. Based on the security level indicator 17 of the target secure element, the secure element 1, the secure element management unit 3 and/or the device application 62 of the device 6 and/or the secure element 1 may check whether the security level is sufficient for executing the wallet application on the secure element.

The devices 6, 7 preferably comprise a wallet user interface application 61, 71, allowing the user of the wallet application to control transactions and/or configure the wallet application (check amount stored, load tokens from bank, ...). They may also comprise a secure element management application 62, 72 acting as an intermediary between the secure element and the remote secure element management unit 3.

### REFERENCE SIGNS

- 1: secure element
- 2: target secure element
- 3: secure element management unit
- 6, 7: user device
- 8: token issuer unit
- 9: token reference register

- 10: wallet application
- 11: wallet identifier
- 12: wallet key
- 13: wallet certificate
- 14: monetary value token
- 15: history data
- 16: wallet state
- 17: security level certificate
- 19: wallet code

- 21: encrypted wallet data
- 28: transfer encryption key
- 29: wallet transfer code

- 61, 71: wallet user interface application
- 62, 72: secure element management application

- 101: decryption key preparation
- 102: target secure element preparation
- 103: decryption key distribution
- 105: encrypted wallet data transfer

## Claims

1. Secure element (1), comprising:
a wallet application (10) of a payment transaction system,
the wallet application (10) comprising static wallet data (11,12,13) and variable wallet data (14,15),
wherein the static wallet data (11,12,13) include a unique wallet identifier (11) identifying the wallet application (10) of the secure element (1) in the payment transaction system,
wherein the variable wallet data (14,15) change in transactions (T1,T2) of the payment transaction system,
**characterized in that**
after one or more transactions (T1) have been performed with the wallet application (10) of the secure element (1), the secure element (1) is configured for transferring the wallet application (10) to a target secure element (2) for performing further transactions with the transferred wallet application (10) in the target secure element (2); and
the secure element (1) is configured to encrypt at least a part of the static wallet data (11,12,13) and/or the variable wallet data (14,15) for a decryption in the target secure element (2).

2. The secure element (1) of claim 1, **characterized in that**
a first part of the wallet application (10) of the secure element (1) is provided by the secure element (1) for the target secure element (2), the first part including the encrypted wallet data (21), and
a second part of the wallet application (10) of the secure element (1) is provided for the target element (2) by a secure element management unit (3), wherein preferably the second part comprises a wallet code (19) of the wallet application (10) and/or static wallet data (11, 12, 13).

3. The secure element (1) of claim 1 or 2, **characterized in that** the encrypted data (21) are transferred (105), preferably locally transferred, from the secure element (1) to the target secure element (2), optionally via a device (6) of the secure element (1) and/ or a device of the target secure element (2).

4. The secure element (1) of one of claims 1 to 3, **characterized in that** the secure element (1) is configured to exchange (101) a decryption key (28) for the decryption of the encrypted wallet data (21) with a secure element management unit (3), wherein the secure element management unit (3) provides the decryption key (28) to the target secure element (2).

5. The secure element (1) of one of claims 1 to 3, **characterized in that** the secure element (1) is configured to exchange or generate a decryption key (28) for the decryption of the encrypted wallet data (21) with the target secure element (2), preferably based on a key provided to the target secure element (2) by a secure element management unit (3).

6. The secure element (1) of one of claims 1 to 5, **characterized in that** the static wallet data (11, 12, 13) further comprises a wallet secret key (12) and/or a wallet certificate (13), wherein the wallet certificate (13) preferably certifies a wallet public key of the wallet secret key (12) and/or the wallet identifier (11).

7. The secure element (1) of one of the preceding claims, **characterized in that** the variable wallet data (14, 15) comprise one or more monetary value tokens (14).

8. The secure element (1) of one of the preceding claims, **characterized in that** the variable wallet data (14, 15) comprise history data (15) for performed transactions, particularly token registration data and/or transaction registration data.

9. The secure element (1) of one of claims 6 to 8, **characterized in that** the encrypted data (21) transferred (105) to the target secure element (2) comprise
- the unique wallet identifier (11) and/or the wallet secret key (12) and/or the wallet certificate (13); and/or
- the one or more monetary value tokens (14) and/or the history data (15).

10. The secure element (1) of one of claims 1 to 9, **characterized in that** the wallet application (10) comprises a wallet status (16), wherein
- exclusively either the wallet status (16) of the wallet application (10) in the secure element (1) or in the target secure element (2) represents an active status in which transactions are possible; and/or
- one or both wallet status (16) of the secure elements (1, 2) represent a transfer status in which no transactions are possible, in particular before the encrypted data (21) are generated and/or transferred; and/or
- the wallet status of the secure element (1) represents an inactive status in which no transactions are possible, at least after the encrypted data (21) are generated and/or transferred.

11. The secure element (1) of one of claims 1 to 10, **characterized in that** one or both secure elements (1,2) comprise a verifiable security level indicator (17), the security level indicator (17) can be verified by the secure element (1) or the secure element management unit (3) in a check that the security level is high enough for the wallet application (10).

12. A device (6) comprising a, preferably embedded, secure element (1) according to one of the preceding claims, wherein the device preferably includes a wallet user interface application (61) and/or a secure element management application (62).

13. A system, comprising
- the secure element (1) of one of claims 1 to 11, optionally being an embedded secure element (1) of a device (6), and
- the target secure element (2), optionally being an embedded secure element (2) of another device (7).

14. The system of claim 13, **characterized by** further comprising
- one or more multiple secure element management units (3); and
- multiple further secure elements (1, 2) including a wallet application (10).

15. The system of claim 13 or 14, **characterized by** further comprising
- a token (reference) register (9); and/or
- a token issuer unit (8).
